# EUROPÄISCHE PATENTSCHRIFT

(11) **EP 4 247 671 B1**
(45) Veröffentlichungstag und Bekanntmachung des Hinweises auf die Patenterteilung: **03.12.2025**
(21) Anmeldenummer: 21802231.7
(22) Anmeldetag: 27.10.2021
(51) Int. Cl.: B60R 25/02, B62H 5/02, B62K 21/04

(54) **KRAFTRAD**
MOTORCYCLE
MOTOCYCLETTE

(30) Priorität: 20.11.2020 DE 102020130755
(43) Veröffentlichungstag der Anmeldung: 27.09.2023
(73) Patentinhaber: Bayerische Motoren Werke Aktiengesellschaft, 80809 München (DE)
(72) Erfinder: LOISTL, Stephan, 82237 Wörthsee (DE)
(86) Internationale Anmeldenummer: PCT/EP2021/079765
(87) Internationale Veröffentlichungsnummer: WO 2022/106163

(56) Entgegenhaltungen:
- EP-A2- 0 041 058
- CN-A- 103 950 489
- DE-A1- 102018 128 430
- JP-A- 2004 276 865
- JP-A- 2006 231 983
- JP-A- 2015 013 536

## Beschreibung

Die vorliegende Erfindung betrifft ein Kraftrad, insbesondere ein Motorrad.

Im Speziellen geht es vorliegend um die Befestigung eines Zündschlosses bzw. eines Zündlenkschlosses an beispielsweise einem Motorrad. Derartige Vorrichtungen sind oftmals direkt strukturfest in oder an dem entsprechenden Motorrad verbaut. Eine typische Befestigungsstelle ist beispielsweise die Gabelbrücke einer Gabel des jeweiligen Motorrads. Nachteilig daran ist, dass durch die strukturfeste Verschraubung Stöße und Vibrationen, die im Fahrbetrieb auftreten, direkt in das Zündschloss bzw. in das Zündlenkschloss eingeleitet werden. Dies kann zu Defekten führen. Insbesondere elektronische Zündschlösser oder Zündlenkschlösser können hierbei Schäden nehmen. Die DE 10 2018 128 430 A1 schlägt daher eine Vorrichtung zur Fixierung eines Zündlenkschlosses eines Motorrads mit einer Halterung vor, an der das Zündlenkschloss fixiert ist, wobei die Vorrichtung mittels der Halterung durch Befestigungsmittel an dem Motorrad fixierbar ist und an der Halterung angeordnete elastische Entkopplungselemente zur Stoß- und Vibrationsentkopplung zwischen dem Motorrad und der Halterung umfasst. Zwar kann damit eine gute Entkopplung erreicht werden, allerdings sind der Bau- und Montageaufwand hoch. Aufgrund der Vielzahl von verwendeten Bauteilen ist diese Lösung zudem kostenintensiv und beansprucht viel Bauraum.

Die JP 2015 013536 A offenbart einen Instrumententräger, aus welchem Feuchtigkeit entweichen kann.

Die EP 0 041 058 A2 eine Befestigungsvorrichtung für die Lenker von Motorrädern und dergleichen, bei der der Lenker auf der oberen Gabelbrücke elastisch gelagert ist.

Die CN 103 950 489 A betrifft ein Zündschloss, welches in einem Verkleidungsteil angeordnet ist.

Die JP 2004 276865 A betrifft eine Schalterabdeckung für ein Motorrad.

Die JP 2006 231983 A betrifft einen Halter für ein Zündschluss zur Befestigung an einer Gabelbrücke eines Motorrads. Der Halter soll das Zündschloss von Vibrationen seitens des Motorrads entkoppeln.

Es ist daher eine Aufgabe der vorliegenden Erfindung, ein Kraftrad anzugeben, wobei die Integration bzw. Anbindung des Zündschlosses bzw. des Zündlenkschlosses gegenüber den bekannten Lösungen vereinfacht werden soll, ohne dabei das Zündschloss bzw. das Zündlenkschloss mechanisch zusätzlich zu belasten.

Diese Aufgabe wird durch ein Kraftrad gemäß Anspruch 1 gelöst. Weitere Vorteile und Merkmale ergeben sich aus den Unteransprüchen sowie der Beschreibung und der beigefügten Figur.

Erfindungsgemäß umfasst ein Kraftrad ein Zündschloss oder ein Zündlenkschloss, wobei das Zündschloss unmittelbar in oder an einem Entkopplungselement befestigt ist, und wobei das Entkopplungselement in ein Fahrwerks- oder Strukturbauteil des Kraftrads integriert ist, insbesondere direkt bzw. unmittelbar integriert ist. Bei dem Zündschloss bzw. Zündlenkschloss handelt es sich um ein Bauteil, welches dazu vorgesehen und ausgebildet ist, das Kraftrad vor unautorisierter Benutzung zu sichern. Das Zündschloss/Zündlenkschloss ist beispielsweise dazu vorgesehen bzw. ausgelegt, das Kraftrad bzw. dessen Motor zu starten. Bei dem Motor kann es sich um einen Verbrennungsmotor oder um eine elektrische Maschine handeln, alternativ auch um ein Hybridkonzept, umfassend sowohl einen verbrennungsmotorischen als auch einen elektrischen Antrieb. Daneben kann das Zündschloss bzw. das Zündlenkschloss auch die Funktion einer Wegfahrsperre übernehmen, indem es beispielsweise, wenn es im Bereich der Gabel des Kraftrads angeordnet ist, verhindert, dass der Lenker bewegt werden kann (Lenkradschloss bzw. Lenkradarretierung). Mit Vorteil ist nun das Zündschloss nicht direkt strukturfest am Kraftrad angebunden, sondern mittelbar über das Entkopplungselement, wobei dieses allerdings vorteilhafterweise direkt bzw. unmittelbar, insbesondere strukturfest, mit dem Fahrwerks- oder Strukturbauteil verbunden ist. Das Entkopplungselement ist, bevorzugt durch eine entsprechende Materialwahl, zumindest bereichs- oder abschnittsweise elastisch ausgebildet bzw. derart ausgelegt, dass es eine Feder- und/oder Dämpferfunktionalität bereitstellt, welche geeignet ist, Stöße, Vibrationen, Schwingungen etc. des Fahrwerks- oder Strukturbauteils vom Zündschloss/Zündlenkschloss abzuschirmen oder zumindest eine Übertragung auf dieses zu verringern. Auf eine aufwendige Haltevorrichtung kann also verzichtet werden. Das Zündschloss/Zündlenkschloss ist dennoch entkoppelt angeordnet, gelagert bzw. befestigt.

Gemäß einer bevorzugten Ausführungsform ist das Entkopplungselement in die Gabelbrücke einer Gabel des Kraftrads integriert. Dabei ist der Ausdruck "integriert" dahingehend zu verstehen, dass zwischen dem eigentlichen Entkopplungselement und dem Fahrwerks- oder Strukturbauteil, in diesem Fall der Gabelbrücke, keine weiteren Bauteile vorhanden sind. Ebenso erfolgt die Anbindung bzw. Befestigung des Zündschlosses bzw. des Zündlenkschlosses direkt bzw. unmittelbar am Entkopplungselement. Es sind also keine weiteren Vorrichtungen oder Halteelemente dazwischengeschaltet.

Gemäß einer Ausführungsform ist das Entkopplungselement als Buchse ausgebildet, welche einen bevorzugt mehrteiligen, beispielsweise dreiteiligen oder dreilagigen, Aufbau aufweist, wobei zumindest ein Teil aus einem elastischen Werkstoff, wie beispielsweise einem Gummimaterial, gebildet ist. Der elastische Werkstoff ist insbesondere dahingehend ausgelegt, die Entkopplungsfunktion bereitzustellen. Das Entkopplungselement ist insbesondere dahingehend ausgelegt, das Zündschloss bzw. das Zündlenkschloss federnd bzw. dämpfend zu lagern, sodass etwaige Stöße, Vibrationen, Schwingung etc. seitens des Kraftrads nicht unmittelbar in dieses übertragen werden. Ein mehrteiliger Aufbau kann in diesem Zusammenhang insbesondere vorteilhaft sein, um das Entkopplungselement mit dem Fahrwerks- oder Strukturbauteil bzw. dem Zündschloss bzw. dem Zündlenkschloss zu verbinden.

Gemäß einer Ausführungsform ist die Buchse rund, insbesondere kreisrund. Alternativ können aber auch andere Querschnittsformen vorteilhaft sein.

Gemäß einer Ausführungsform weist die Buchse eine Außenbuchse aus einem Aluminiumwerkstoff und eine Innenbuchse aus einem Stahlwerkstoff auf, wobei dazwischen eine Zwischenbuchse aus einem Gummiwerkstoff ausgebildet ist. Der Gummiwerkstoff ist beispielsweise auf die Außenbuchse und/oder die Innenbuchse aufvulkanisiert. Das Material der Außenbuchse ist zweckmäßigerweise an das Material des Fahrwerks- oder Strukturbauteils, in welchem die Buchse angeordnet ist, angepasst. Im Fall einer Gabelbrücke aus einem Aluminiumwerkstoff ist die Außenbuchse daher zweckmäßigerweise ebenfalls aus einem Aluminiumwerkstoff. Die Innenbuchse ist zweckmäßigerweise dahingehend ausgelegt, das Zündschloss zu befestigen. Hierzu sind an der Innenbuchse entsprechende Befestigungsmittel vorgesehen. Gemäß einer Ausführungsform weist die Innenbuchse beispielsweise ein Gewinde auf.

Zweckmäßigerweise ist das Zündschloss direkt über ein Befestigungsmittel am Entkopplungselement befestigt, insbesondere mit diesem verschraubt. Zweckmäßigerweise wird als Befestigungsmittel eine Abreißschraube verwendet.

Insbesondere ist das Befestigungsmittel derart angeordnet, dass es über das Entkopplungselement vom Fahrwerks- oder Strukturbauteil entkoppelt ist. Das Befestigungsmittel ist also nicht strukturfest verschraubt, sondern wirkt lediglich mit dem Entkopplungselement zusammen. Somit wird sichergestellt, dass das Zündschloss bzw. Zündlenkschloss auch tatsächlich entkoppelt ist.

Erfindungsgemäß ist das Entkopplungselement derart befestigt, dass es unlösbar mit dem Fahrwerks- oder Strukturbauteil verbunden ist. Die tatsächliche Ausgestaltung ist von der Einbausituation bzw. den verwendeten Werkstoffen abhängig.

Gemäß einer Ausführungsform ist das Entkopplungselement beispielsweise mit dem Fahrwerks- oder Strukturbauteil, wobei es sich bei dem Fahrwerks- oder Strukturbauteil insbesondere um eine Gabelbrücke handelt, verpresst oder verstemmt bzw. zur Befestigung verpresst oder verstemmt. Gemäß einer Ausführungsform ist beispielsweise die Innenbuchse oder die Außenbuchse endseitig umgeformt, um so eine zusätzliche Befestigung des Entkopplungselements zu bewirken.

Gemäß einer Ausführungsform ist zumindest ein Teil des Entkopplungselements integral durch das Fahrwerks- oder Strukturbauteil gebildet oder geformt. Gemäß einer Ausführungsform ist beispielsweise die Außenbuchse integral durch die Gabelbrücke ausgebildet. Der elastische Werkstoff ist in diesem Fall direkt in der Gabelbrücke angeordnet, ohne eine dazwischen gelagerte (Außen-)Buchse.

Gemäß einer Ausführungsform ist der elastische Werkstoff eingegossen, insbesondere in das Fahrwerks- oder Strukturbauteil eingegossen. Gemäß einer Ausführungsform ist das Entkopplungselement direkt am Fahrwerks- oder Strukturbauteil erzeugt, insbesondere beispielsweise mittels eines Gießverfahrens. Gemäß einer Ausführungsform ist das Entkopplungselement auch vollständig aus dem elastischen Werkstoff gebildet, als nicht mehrteilig ausgebildet, wobei sichergestellt werden muss, dass die Anbindung bzw. Befestigung des Zündschlosses bzw. Zündlenkschlosses über ein Befestigungsmittel, wie beispielsweise einer Schraube, mit ausreichender Festigkeit möglich ist.

Gemäß einer Ausführungsform ist das Zündschloss mittelbar über den elastischen Werkstoff in oder an das Fahrwerks- oder Strukturbauteil angegossen bzw. angebunden. Das Zündschloss wird also nicht nachträglich am Entkopplungselement angeordnet bzw. befestigt, sondern direkt beim Erzeugen des Entkopplungselements, beispielsweise beim Eingießen des elastischen Werkstoffs, angebunden. In einem ersten Schritt wird das Zündschloss/Zündlenkschloss relativ zum Fahrwerks- oder Strukturbauteil positioniert, wobei ein Abschnitt des Zündschlosses/Zündlenkschlosses oder ein damit verbundenes Befestigungsmittel-/Element beispielsweise in eine Öffnung des Fahrwerks- oder Strukturbauteils ragt. In einem zweiten Schritt wird die Öffnung zum Erzeugen des Entkopplungselements mit einem geeigneten Werkstoff, beispielsweise mit einem geeigneten elastischen Kunststoff, ausgegossen. Nach dessen Aushärtung ist das Zündschloss fixiert und gefedert/gedämpft gelagert. Auf eine nachträgliche bzw. gesonderte Befestigung kann gänzlich verzichtet werden.

Gemäß einer bevorzugten Ausführungsform weist das Zündschloss zumindest einen Befestigungsabschnitt auf, welcher unmittelbar in oder an einem bzw. dem Entkopplungselement befestigt ist. Bevorzugt weist das Zündschloss beispielsweise zwei Befestigungsabschnitte auf, welche jeweils mit einem Entkopplungselement zusammenwirken bzw. welche jeweils über ein Entkopplungselement mit dem Fahrwerks- oder Strukturbauteil verbunden sind. Bei den Befestigungsabschnitten handelt es sich um Bereiche oder Abschnitte des Zündschlosses/Zündlenkschlosses bzw. dessen Gehäuse, welche zur Anordnung eines Befestigungsmittels, wie einer Schraube, ausgelegt sind. Das Gehäuse des Zündschlosses/Zündlenkschlosses ist bevorzugt aus Kunststoff und/oder Metall gefertigt. Neben den Befestigungsabschnitten weist das Zündschloss zweckmäßigerweise ein Bedienelement auf, wobei das Bedienelement beispielsweise einen Start-Stopp-Schalter oder einen Schließzylinder umfasst. Gemäß einer bevorzugten Ausführungsform handelt es sich vorliegend um ein elektrisches Zündlenkschloss, insbesondere umfassend eine Fernbedienung. Den Zündschlüssel muss der Fahrer lediglich bei sich tragen. Das Starten und Ausschalten des Motors erfolgt bevorzugt ausschließlich über das Bedienelement, beispielsweise den Start-Stopp-Schalter. Daneben weist das Zündschloss bzw. Zündlenkschloss typischerweise noch eine Vorrichtung auf, welche bevorzugt als Lenkradschloss dienen kann.

Wie bereits erwähnt, handelt es sich bei dem Fahrwerks- oder Strukturbauteil bevorzugt um die Gabelbrücke, insbesondere die obere Gabelbrücke, einer Gabel des Kraftrads. Alternativ kann das Fahrwerks- oder Strukturbauteil aber auch ein Rahmen des Kraftrads sein. Bei dem Kraftrad handelt es sich bevorzugt um ein Motorrad oder um einen Motorroller.

Weitere Vorteile und Merkmale ergeben sich aus der nachfolgenden Beschreibung einer Ausführungsform eines ausschnittsweise und schematisch dargestellten Kraftrads mit Bezug auf die beigefügte Figur.

Es zeigt:

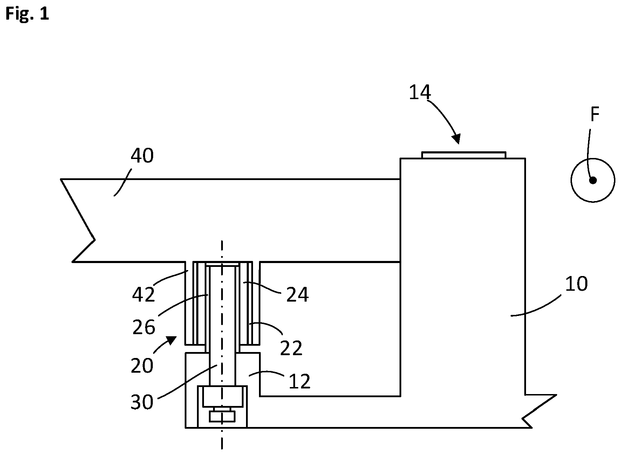

- Fig. 1:: eine schematische und teilweise Darstellung einer Ausführungsform eines Kraftrads, wobei insbesondere eine Gabelbrücke des Kraftrads und ein Teil eines Zündschlosses zu sehen sind.

**Fig. 1** zeigt in einer perspektivischen, schematischen Darstellung entgegen einer Fahrtrichtung F gesehen ein Kraftrad, wobei vorliegend nur Ausschnitte dargestellt sind. Bezugszeichen 40 bezeichnet eine teilweise dargestellte Gabelbrücke, wobei diese einen Fortsatz oder Dom 42 aufweist, in welchem ein Entkopplungselement 20 angeordnet ist. Das Entkopplungselement 20 ist vorliegend als Buchse ausgebildet, umfassend eine Außenbuchse 22, eine Zwischenbuchse 24 sowie eine Innenbuchse 26. Bezugszeichen 10 bezeichnet ein Zündschloss, welches vorliegend nur in etwa zur Hälfte dargestellt ist. Zu sehen ist ein linker Befestigungsabschnitt 12, welcher über ein Befestigungsmittel 30 mit der Innenbuchse 26 des Entkopplungselements 20 verbunden bzw. mit diesem verschraubt ist. Die hier dargestellten Bereiche des Zündschlosses/Zündlenkschlosses 10 sind beispielsweise aus Kunststoff und/oder Metall gefertigt. Der rechte hier nicht dargestellte Teil des Zündschlosses 10 wäre analog ausgebildet. Zweckmäßigerweise ist das Zündschloss nun vorliegend nicht direkt strukturfest mit dem Fahrwerks- oder Strukturbauteil, vorliegend der Gabelbrücke 40, verbunden, sondern über das Entkopplungselement 20 von diesem entkoppelt. Als Befestigungsmittel 30 ist vorliegend eine Abreißschraube skizziert. Das Zündschloss 10 weist ein Bedienelement 14, wie beispielsweise einen Start-Stopp-Schalter auf, welcher beispielsweise zum Starten des Fahrzeugs betätigt werden muss.

### Bezugszeichenliste

- 10: Zündschloss
- 12: Befestigungsabschnitt
- 14: Bedienelement, Start-/Stopp-Schalter
- 20: Entkopplungselement, Buchse
- 22: Außenbuchse
- 24: Zwischenbuchse
- 26: Innenbuchse
- 30: Befestigungsmittel
- 40: Fahrwerks- oder Strukturbauteil, Gabelbrücke
- 42: Fortsatz, Dom
- F: Fahrtrichtung

## Patentansprüche

1. Kraftrad,
umfassend ein Zündschloss (10),
wobei das Zündschloss (10) unmittelbar in oder an einem Entkopplungselement (20) befestigt ist, und
wobei das Entkopplungselement (20) in ein Fahrwerks- oder Strukturbauteil (40) des Kraftrads integriert ist,
wobei das Entkopplungselement (20) derart befestigt ist, dass es unlösbar mit dem Fahrwerks- oder Strukturbauteil (40) verbunden ist..

2. Kraftrad nach Anspruch 1,
wobei das Entkopplungselement (20) in die Gabelbrücke (40) einer Gabel des Kraftrads integriert ist.

3. Kraftrad nach Anspruch 1 oder 2,
wobei das Entkopplungselement (20) als Buchse ausgebildet ist, welche einen mehrteiligen Aufbau aufweist,
wobei zumindest ein Teil aus einem elastischen Werkstoff gebildet ist.

4. Kraftrad nach Anspruch 3,
wobei die Buchse (20) eine Außenbuchse (22) aus einem Aluminiumwerkstoff und eine Innenbuchse (26) aus einem Stahlwerkstoff aufweist,
wobei dazwischen eine Zwischenbuchse (24) aus einem Gummiwerkstoff ausgebildet ist.

5. Kraftrad nach Anspruch 4,
wobei die Innenbuchse (26) ein Gewinde aufweist.

6. Kraftrad nach einem der vorhergehenden Ansprüche,
wobei das Zündschloss (10) direkt über ein Befestigungsmittel (30) am Entkopplungselement (20) befestigt, insbesondere mit diesem verschraubt, ist.

7. Kraftrad nach einem der vorhergehenden Ansprüche,
wobei das Entkopplungselement (20) mit dem Fahrwerks- oder Strukturbauteil (40) verpresst oder verstemmt ist.

8. Kraftrad nach einem der vorhergehenden Ansprüche,
wobei zumindest ein Teil des Entkopplungselements (20) integral durch das Fahrwerks- oder Strukturbauteil (40) gebildet oder geformt ist.

9. Kraftrad nach einem der Ansprüche 3-8,
wobei der elastische Werkstoff in das Fahrwerks- oder Strukturbauteil (40) eingegossen ist.

10. Kraftrad nach einem der vorhergehenden Ansprüche,
wobei das Zündschloss (10) zumindest einen Befestigungsabschnitt (12) aufweist, welcher unmittelbar in oder an zumindest einem Entkopplungselement (20) befestigt ist.

## Claims

1. Motorcycle,
comprising an ignition lock (10),
wherein the ignition lock (10) is directly fastened in or on a decoupling element (20), and
wherein the decoupling element (20) is integrated into a chassis or structural component (40) of the motorcycle,
wherein the decoupling element (20) is fastened in such a way that it is inseparably connected to the chassis or structural component (40).

2. Motorcycle according to claim 1,
wherein the decoupling element (20) is integrated into the triple clamp (40) of a fork of the motorcycle.

3. Motorcycle according to claim 1 or 2,
wherein the decoupling element (20) is designed as a bushing which has a multi-part structure,
wherein at least one part is formed from an elastic material.

4. Motorcycle according to claim 3,
wherein the bushing (20) has an outer bushing (22) made of an aluminum material and an inner bushing (26) made of a steel material,
wherein an intermediate bushing (24) made of a rubber material is formed therebetween.

5. Motorcycle according to claim 4,
wherein the inner bushing (26) has a thread.

6. Motorcycle according to any one of the preceding claims,
wherein the ignition lock (10) is directly fastened to the decoupling element (20) by means of a fastening means (30), in particular screwed to it.

7. Motorcycle according to any one of the preceding claims,
wherein the decoupling element (20) is press-fitted or crimped with the chassis or structural component (40).

8. Motorcycle according to any one of the preceding claims,
wherein at least a part of the decoupling element (20) is integrally formed or shaped by the chassis or structural component (40).

9. Motorcycle according to any one of claims 3-8,
wherein the elastic material is cast into the chassis or structural component (40).

10. Motorcycle according to any one of the preceding claims,
wherein the ignition lock (10) has at least one fastening section (12) which is directly fastened in or on at least one decoupling element (20).

## Revendications

1. Motocyclette,
comprenant un antivol de contact (10),
dans laquelle l'antivol de contact (10) est directement fixé dans ou sur un élément de découplage (20), et
dans laquelle l'élément de découplage (20) est intégré dans un composant de châssis ou de structure (40) de la motocyclette,
dans laquelle l'élément de découplage (20) est fixé de manière à être relié de façon inséparable au composant de châssis ou de structure (40).

2. Motocyclette selon la revendication 1,
dans laquelle l'élément de découplage (20) est intégré dans le té de fourche (40) d'une fourche de la motocyclette.

3. Motocyclette selon la revendication 1 ou 2,
dans laquelle l'élément de découplage (20) est conçu sous forme de douille présentant une structure en plusieurs parties,
dans laquelle au moins une partie est formée d'un matériau élastique.

4. Motocyclette selon la revendication 3,
dans laquelle la douille (20) comprend une douille extérieure (22) en matériau aluminium et une douille intérieure (26) en matériau acier,
dans laquelle une douille intermédiaire (24) en matériau caoutchouc est formée entre les deux.

5. Motocyclette selon la revendication 4,
dans laquelle la douille intérieure (26) présente un filetage.

6. Motocyclette selon l'une quelconque des revendications précédentes,
dans laquelle l'antivol de contact (10) est directement fixé à l'élément de découplage (20) au moyen d'un élément de fixation (30), en particulier vissé à celui-ci.

7. Motocyclette selon l'une quelconque des revendications précédentes,
dans laquelle l'élément de découplage (20) est emmanchée à force ou sertie avec le composant de châssis ou de structure (40).

8. Motocyclette selon l'une quelconque des revendications précédentes,
dans laquelle au moins une partie de l'élément de découplage (20) est formée ou façonnée intégralement par le composant de châssis ou de structure (40).

9. Motocyclette selon l'une quelconque des revendications 3 à 8,
dans laquelle le matériau élastique est coulé dans le composant de châssis ou de structure (40).

10. Motocyclette selon l'une quelconque des revendications précédentes,
dans laquelle l'antivol de contact (10) présente au moins une section de fixation (12) qui est directement fixée dans ou sur au moins un élément de découplage (20).
